Europäisches Patentamt

(19) European Patent Office  (11) Publication number: **0 060 526**

Office européen des brevets  **B1**

(12) **EUROPEAN PATENT SPECIFICATION**

(45) Date of publication of patent specification: **28.05.86**  (51) Int. Cl.⁴: **B 32 B 27/08, C 08 L 23/12,**
**C 08 L 51/04, C 08 L 53/02**

(21) Application number: **82101964.3**

(22) Date of filing: **11.03.82**

(54) **Coextruded laminate comprising a polypropylene sheet, and a sheet of a mixture containing a high impact polystyrene.**

(30) Priority: **12.03.81 IT 2031381**

(43) Date of publication of application:
**22.09.82 Bulletin 82/38**

(45) Publication of the grant of the patent:
**28.05.86 Bulletin 86/22**

(84) Designated Contracting States:
**BE DE FR GB LU NL**

(56) References cited:
**EP-A-0 004 685**
**GB-A-1 357 950**
**GB-A-1 427 959**
**US-A-3 424 649**

(73) Proprietor: **MONTEFINA S.A.**
**Zoning Industriel**
**B-6520 Feluy (BE)**

(72) Inventor: **Castelein, Jean**
**23, rue des Thebais**
**B-6322 Mellery (BE)**

(74) Representative: **Weinhold, Peter, Dr.**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

Courier Press, Leamington Spa, England.

## Description

Object of the present invention is a thermoplastic laminate particularly suited for thermo-forming ("vacuum forming"), and having a composite structure comprising a sheet of crystalline polypropylene and an adjacent sheet of polymeric material consisting of a mixture containing 1% to 75% by weight of a polystyrene, from 20 to 85% by weight of crystalline polypropylene and from 5% to 15% by weight of styrene/diene block copolymer, in which the diene is butadiene or isoprene, which is characterized in that

a) no further layer is present in said thermoplastic laminate,

b) said polystyrene is a high impact polystyrene (HIPS), and

c) said styrene/diene block copolymer has 3 or more blocks and is represented by the formula S—(D—S)$_n$ wherein n is an integer, preferably 1, S=styrene, D=butadiene or isoprene, having a content of styrene lower than 50% by weight.

Said sheet of polymeric material preferably contains from 45% to 55% by weight of high-impact polystyrene, from 40% to 50% by weight of polypropylene and from 5% to 15% by weight (but most preferably 10% by weight) of a block copolymer.

The sheet based on crystalline polypropylene may also be constituted of a mixture containing up to 15% by weight of the above cited styrene/diene block copolymer.

By the term "crystalline polypropylene" is meant the polypropylene obtained by means of stereospecific catalysts, having an isotacticity index of at least 90 (determined as a residue of the extraction with boiling n-heptane, expressed in % by weight).

Another object of the present invention are containers for foodstuffs, which are obtainable by thermo-forming of the above laminate, the inner side of which consists of the polypropylene layer.

In GB—A—1 427 959 a process for the manufacture of laminates is described whereby, among others, a laminate is produced which comprises a polypropylene layer and a layer consisting of a mixture of polypropylene, polystyrene and a block copolymer of polybutadiene and polystyrene. However, the latter layer only functions as a primer layer between the first mentioned layer and a third layer consisting of polystyrene. Therefore, at least three layers are present in said laminates which results in their production process being more complicated than the one for the present laminate.

The laminate of the present invention is obtained by a co-extrusion process of the polymeric materials which constitute the respective layers. The co-extrusion process is achieved on a conventional equipment for such an operation.

The extrusion temperature lies around 210°C for the polymeric material based on high-impact polystyrene and around 200°C for the polypropylene.

The extruded material coming out of the slot-shaped nozzle, is passed through a multi-roll calender, at a controlled roll temperature of between 20°C and 95°C.

The co-extrusion of the two types of polymeric materials, according to the invention, may be used also in the production of extruded films. In this case there will be provided a suitable device for the stretching of the extruded material coming out of the extrusion nozzle.

The styrene/diene block copolymer is an elastomeric copolymer of the type having three or more blocks and has the structure S—(D—S)$_n$ in which *n* is an integer, preferably 1, S=styrene, D=diene chosen from butadiene and isoprene, having a content in styrene lower than 50% by weight. The copolymers of this type are well known in the Prior Art and, for instance, are described in US—A—3,149,182 and 3,390,207.

In general they are obtained by means of anionic polymerization in a solvent with a polymerization catalyst of the metal-alkyl type, such as e.g. lithium-alkyls.

The achievement of a coextruded laminate absolutely free of breaking-off phenomena or the detachment of the composing sheets, is the result of the specific combination of the above indicated polymeric materials.

In fact, it has been observed that if instead of the polymeric composition based on polystyrene there is used an analogous one not containing polypropylene, there is no adhesion to the co-extruded polypropylene or polypropylene +10% S—B—S copolymer sheet. Analogously, a polymeric composition based on polystyrene such as the one used in the process according to this invention, does not show a fast adherence to the co-extruded high-impact polystyrene or crystalline polystyrene sheet.

The laminate obtained according to this invention consists of an assembly of sheets perfectly welded together to each other.

Such a laminate may be bent, folded or rolled up into rolls or shaped (formed) in various ways without suffering any breaking-off of the component sheets.

This laminate is particularly suited for use in forming processes under vacuum: thereby it is possible to obtain formed bodies of a circular cross section having a depth/diameter ratio in the drawing that may reach 22, without occurrence of any detachment of the component sheets.

The laminate according to this invention is particularly suited for the production of containers for foodstuffs; in this case the polypropylene layer forms the internal surface of the container in contact with the food, thus avoiding the drawbacks that would be met with if the foodstuff would be put into contact with the polystyrene-based polymeric material.

It is quite known that, because of its characteristics, such as resistance to oils and fats, polypropylene is particularly suited for use in this specific field. At the same time the laminate according to this invention has

2

**0 060 526**

processability characteristics quite superior to those of polypropylene. In particular, the forming speed is close to that of the polymeric materials based on polystyrene.

Example

A polymeric composition was prepared by mixing together 45 parts by weight of high-impact polystyrene (HIPS), 45 parts by weight of polypropylene (PP) and 10 parts by weight of block-copolymers SBS containing 28% by weight of styrene, having a melt flow index of 6 g/10 min, known as "Cariflex® TR-1102" and produced by Shell Co.

This polymeric material was co-extruded with a crystalline polypropylene (PP), on a screw extruder with a screw of 60 mm diameter and on a co-extruder with a screw of 45 mm Ø, both having a L/D ratio of 32.

The extrusion conditions for the polymeric material based on styrene were:

Operational conditions for HIPS

| | |
|---|---|
| Heating of the plasticizing chamber, zone 1: | 165°C |
| Heating of the plasticizing chamber, zone 2: | 180°C |
| Heating of the plasticizing chamber, zone 3: | 190°C |
| Heating of the plasticizing chamber, zone 4: | 200°C |
| Heating of the plasticizing chamber, zone 5: | 200°C |
| Temperature of filter exchanger: | 200°C |
| Temperature of static mixer: | 215°C |
| Pressure in the extrusion head: | 78,5 bar (80 kg/cm$^2$) |
| Temperature of molten mass: | about 220°C |
| Revolving speed of extrusion screw: | abt. 65 rev./min. |

Operational conditions for P.P.:

| | |
|---|---|
| Heating of plasticizing chamber, zone 1: | 180°C |
| Heating of plasticizing chamber, zone 2: | 185°C |
| Heating of plasticizing chamber, zone 3: | 200°C |
| Heating of plasticizing chamber, zone 4: | 205°C |
| Heating of plasticizing chamber, zone 5: | 210°C |
| Temperature of filter exchanger | 200°C |
| Temperature of static mixer | 200°C |
| Pressure in the extrusion head | 78,5 bar (80 kg/cm$^2$) |
| Temperature of molten mass | 203°C |
| Speed of extrusion screw | 65 rev./min. |

Nozzle:

| | |
|---|---|
| temperature | 200°C |
| width of slot: | 0.8 mm |

3

# 0 060 526

Calender:

| | |
|---|---|
| 1st roller, Ø 347 mm | 70°C |
| 2nd roller, Ø 347 mm | 85°C |
| 3rd roller, Ø 347 mm | 85°C |
| 4th roller, Ø 238.4 mm | 20°C |
| 5th roller, Ø 238.4 mm | 20°C |

there was obtained a laminate whose two layers of polymeric material were perfectly welded together. There did not occur any detachment when subjecting the laminate to bending tests such as for instance by rolling it up to coil.

Thermo-forming tests:

The thermo-forming machine was of the OMV® F 425 type. Infrared heaters on both sides of the sheet. The upper heater has 6 longitudinal rows of infrared heating elements, separately adjustable. The lower heater had only 5 of such rows. The mold was a 4 cavity die for small cups:

| | |
|---|---|
| upper diameter | 94 mm Ø |
| lower diameter | 81 mm Ø |
| depth | 58 mm |

Operational conditions:

| | |
|---|---|
| Upper heater | 410°C |
| Lower heater | 410°C |
| Cooling of the mold | 10°C |
| Molding speed | 36 shots per min. |

The multi-layer laminate, due to its polystyrene component, may be brought up, without difficulty, to a temperature above the melting point of the polypropylene, thereby facilitating the thermo-forming of the laminate.

The molded pieces showed an excellent distribution of the material and excellent mechanical properties. No scaling off or detachment occurred.

**Claims**

1. Thermoplastic laminate, suitable for thermo-forming, having a composite structure comprising a sheet of crystalline polypropylene and an adjacent sheet of polymeric material consisting of a mixture containing 1% to 75% by weight of a polystyrene, from 20 to 85% by weight of crystalline polypropylene and from 5% to 15% by weight of styrene/diene block copolymer, in which the diene is butadiene or isoprene, characterized in that

a) no further layer is present in said thermoplastic laminate,

b) said polystyrene is a high impact polystyrene (HIPS), and

c) said styrene/diene block copolymer has 3 or more blocks and is represented by the formula $S-(D-S)_n$ wherein n is an integer, preferably 1, S=styrene, D=butadiene or isoprene, having a content of styrene lower than 50% by weight.

2. Thermoplastic laminate according to claim 1, characterized in that the sheet of crystalline polypropylene further contains up to 15% by weight of the styrene/diene block copolymer as defined in claim 1.

3. Thermoplastic laminate according to claim 1, characterized in that the polymeric material contains from 45% to 55% by weight of high-impact polystyrene, from 40% to 50% by weight of polypropylene and from 5% to 15% by weight of a block copolymer.

4. Containers for foodstuffs, characterized in that they are obtainable by thermo-forming the laminate of claim 1, and that the inner side in contact with the product consists of the polypropylene layer.

**Patentansprüche**

1. Thermoplastischer Schichtstoff, der zur Wärmeverformung geeignet ist, mit einer

4

Verbundstoffstruktur, die eine Lage aus kristallinem Polypropylen und eine benachbarte Lage aus polymerem Material umfaßt, das aus einer 1 bis 75 Gew.-% eines Polystyrols, 20 bis 85 Gew.-% kristallines Polypropylen und 5 bis 15 Gew.-% Styrol/Dien-Blockcopolymer enthaltenden Mischung besteht, wobei das Dien Butadien oder Isopren ist, dadurch gekennzeichnet, daß

a) keine weitere Schicht in diesem thermoplastischen Schichtstoff anwesend ist,

b) das Polystyrol ein hoch schlagzähes Polystyrol (HIPS) ist und

c) das Styrol/Dien-Blockcopolymer 3 oder mehr Blöcke hat und durch die Formel $S—(D—S)_n$ dargestellt wird, worin n eine ganze Zahl, vorzugsweise 1, ist, S=Styrol ist, D=Butadien oder Isopropen ist, mit einem Gehalt an Styrol von weniger als 50 Gew.-%.

2. Thermoplastischer Schichtstoff nach Anspruch 1, dadurch gekennzeichnet, daß die Lage aus kristallinem Polypropylen weiterhin bis zu 15 Gew.-% des Styrol/Dien-Blockcopolymers gemäß Definition in Anspruch 1 enthält.

3. Thermoplastischer Schichtstoff nach Anspruch 1, dadurch gekennzeichnet, daß das polymere Material 45 bis 55 Gew.-% hoch schlagzähes Polystyrol, 40 bis 50 Gew.-% Polypropylen und 5 bis 15 Gew.-% eines Blockcopolymers enthält.

4. Behälter für Nahrungsmittel, dadurch gekennzeichnet, daß sie durch Wärmeverformung des Schichtstoffes von Anspruch 1 erhältlich sind und daß die Innenseite in Kontakt mit dem Produkt aus der Polypropylenschicht besteht.

## Revendications

1. Laminé thermoplastique, approprié pour le thermoformage, ayant une structure composite comprenant une feuille de polypropylène cristallin ainsi qu'une feuille adjacente d'un matériau polymérique consistant en un mélange comprenant de 1 à 75% en poids de polystyrène, de 20 à 85% de polypropylène cristallin et de 5 à 15% en poids d'un copolymère bloc styrène/diène, dans lequel le diène est l'isoprène ou le butadiène, ce laminé étant caractérisé en ce que:

a) il n'y a pas d'autre couche présente dans le laminé thermoplastique;

b) le polystyrène est un polystyrène résistant aux chocs (HIPS),

c) le copolymère bloc styrène/diène possède 3 ou plusieurs blocs et est représenté par la formule $S—(D—S)_n$ dans laquelle n est un nombre entier, de préférence 1, S est le styrène, D le butadiène ou l'isoprène, ayant une teneur en styrène inférieure à 50% en poids.

2. Laminé thermoplastique selon la revendication 1, caractérisé en ce que la feuille de polypropylène cristallin contient en plus jusque 15% en poids du copolymère bloc styrène/diène défini à la revendication 1.

3. Lamine thermoplastique selon la revendication 1, caractérisé en ce que le matériau polymérique contient de 45 à 55% en poids de polystyrène choc, de 40 à 50% en poids de polypropylène et de 5 à 15% en poids du copolymère bloc.

4. Récipients pour nourriture, caractérisés en ce qu'ils sont obtenus par thermoformage du laminé selon la revendication 1, et en ce que la face interne en contact avec le produit consiste en une couche de polypropylène.